# EUROPEAN PATENT SPECIFICATION

(11) **EP 0 341 036 B1**
(45) Date of publication and mention of the grant of the patent: **13.12.1995**
(21) Application number: 89304437.0
(22) Date of filing: 03.05.1989
(51) Int. Cl.: G06F 3/06

(54) **A method of operating an information handling system**
Verfahren zur Betreibung eines Informationsverarbeitungssystems
Méthode de commande d'un système de traitement d'informations

(30) Priority: 05.05.1988 US 190612
(43) Date of publication of application: 08.11.1989
(73) Proprietor: International Business Machines Corporation, Armonk, N.Y. 10504 (US)
(72) Inventor: Blount, Michelle Kaeser, Tucson Arizona 85747 (US); Clark, Connie Mae, Tucson Arizona 85741 (US); Harding, Warren Bruce, Tucson Arizona 85749 (US); Tang, Horace Tin Sze, 144, Tucson Arizona 85718 (US)
(74) Representative: Burt, Roger James, Dr.

(56) References cited:
- EP-A- 0 086 886
- US-A- 4 682 305
- IBM TECHNICAL DISCLOSURE BULLETIN. vol. 26, no. 5, October 1983, NEW YORK US pages 2400 - 2403; J.K.CHOU ET AL.: 'CIRCULAR SCAN OF VTOC USAGE MAP'

## Description

The present invention relates to information handling systems employing data records retentively stored in record media, particularly those information handling systems which store image data objects on such record media.

When a host processor accesses a peripheral data storage device, such as a magnetic tape unit, disk recorder (direct access storage device--DASD) or communications system, it is common practice to batch or group a plurality of data objects (records, data sets, etc.) for data transfer during each access to such peripheral data storage system. The reason for such grouping or batching is to increase efficiency of the information handling system to which the host processor and the peripheral devices belong. Each access to a peripheral device has associated control protocol steps which consume valuable computing time. By reducing the number of accesses, through increasing the amount of data transferred during each access, efficiency of the information handling systems is enhanced. Such grouping or batching has been selected based upon evaluating parameters associated with the data itself. For example, G. M. Wilson in the article "Batching Algorithm in Files and Hierarchic Data Bases", IBM TECHNICAL DISCLOSURE BULLETIN, Vol. 26, No. 1, June 1983, pp. 416-420 inclusive, teaches that whenever a single or common set of data is to be accessed by a plurality of users, then such data is batched or grouped together for enabling such shared accessing. In other systems, such as shown by Hartung et al., USP 4,636,946, the data grouping or batching was in accordance with a least-recently used (LRU) algorithm as it would destage or transfer data from a cache random-access memory to a DASD. Such grouping was based upon all of the data to be destaged which is storable in a single cylinder of the DASD. This selection of grouping is designed to enhance performance in that all of the tracks in a single cylinder of DASD can be electronically switched between the various recording heads of the cylinder without radially moving a headarm.

Dixon et al in USP 4,489,378 discloses group or batch read accesses to a DASD for promotion of data to cache or other buffer. Such grouping is based upon expected data usage of the data being read from the DASD by the host processor. Data adjacent the requested data but in addition to the requests are promoted from the DASD to the cache or other buffer.

US 4682305 discloses an optical disk unit which is incapable of writing working in conjunction with a magnetic disk unit, which is capable of re-writing. Effectively update requests to the optical disk unit are stored on the magnetic disk unit. Subsequently data stored on the magnetic disk unit can be stored on unused parts of the optical disk unit. This combination of optical and magnetic disk unit simulates a re-writable optical disk unit.

The advent of write-once, read-many (WORM) record media creates a requirement for conservation of media; that is, since the media can only be written once, each addressable portion of that record media can only be used to record during a single recording operation. Accordingly, it is desired to store as much information in each of the addressable portions (in disk referred to as "sectors" or "blocks") as possible. To this end, in co-pending, commonly-assigned patent application Flannagan et al, serial number 030,393, filed March 26, 1987 (EP 284037), describes method and apparatus for creating a directory on a WORM medium. The directory is internally indexed to provide faster access to the data recorded on the medium. The procedure includes storing the data on the medium; for each data set being stored in the medium, recording in a directory portion of the medium a "segment" of directory information identifying the location of the data set on the medium, as well as the name of the data set and other parameters. The record medium used in connection with a disclosed embodiment of that application uses addressable sectors each capable of storing a fixed number of data bytes. The index of the directory permits a certain number of index entries for each addressable sector. When such a certain number of the segments were recorded, then one addressable area or sector of the record medium was recorded with directory index information. This technique conserves record media storage space by maximising the use of the sectors for storage of directory index infbrmation. The segment recording was also adapted to maximise use of record media storage space within each addressable sector used for storing directory "segment" information What is needed is a more efficient access and medium usage apparatus and methods for further enhancing usage of peripheral data storage.

It is an object of the present invention to provide for data recording operations which enhance the usage of write-once recording media as well as enhanced performance of an information handling system employing such record media.

According to the invention as defined in claim 1, there is provided a method of operating an information handling system which includes a host processor, a relatively rapid access data buffer element means and a large capacity slower access record medium, in which a plurality of data objects to be stored on said record medium means are automatically accumulated in said buffer element means; characterised by the steps of: (a) for each of said accumulated objects, building a VTOC directory entry and storing the entry in said buffer element means; (b) determining the number of said VTOC directory entries storable in a single one of the addressable storage areas of said record medium means; (c) dividing the number of accumulated data objects by said determined number and when the number of accumulated data objects is equal to or is an integral multiple of said determined number, selecting that number of accumulated data objects and associated VTOC directory entries from said buffer element and transferring same to said record medium during a single access to said record medium means.

Claim 5 defines an information handling system according to the invention, and comprising means for performing the above method.

In accordance with the invention, each record medium includes a table of contents, or directory, called a volume table of contents (VTOC). One VTOC entry describes and stores the disk address of one object stored in the disk. Each addressable sector of the record medium can contain up to a given number of such VTOC entries. A given number of data objects to be recorded on the record medium are collected into a group of objects such that a single access records the given number of record medium objects, and such that the VTOC entries for such given number fill one addressable sector of the disk for maximising usage of the sectors designated for storing control information.

A plurality of such groups of objects, each group preferably having the given number of objects, may be recorded during each given access for enhancing the operation of the information handling system. For example, a minimal number of bytes of information may be required before an access to the record medium is permitted. Such minimal number of bytes of data may require a plurality of such control information storing sectors for storing integral multiples of said given number of VTOC entries during a single device access. This requirement fills a plurality of the VTOC sectors with VTOC entries. For limiting the buffering of data before recording on the record medium, an upper threshold or maximum number of bytes of data can be accumulated for recording on the record medium irrespective of whether or not an integral number of addressable sectors are used to store VTOC entries identifying the data to be recorded.

In order that the invention may be fully understood preferred embodiments thereof will now be described with reference to the accompanying drawings in which:

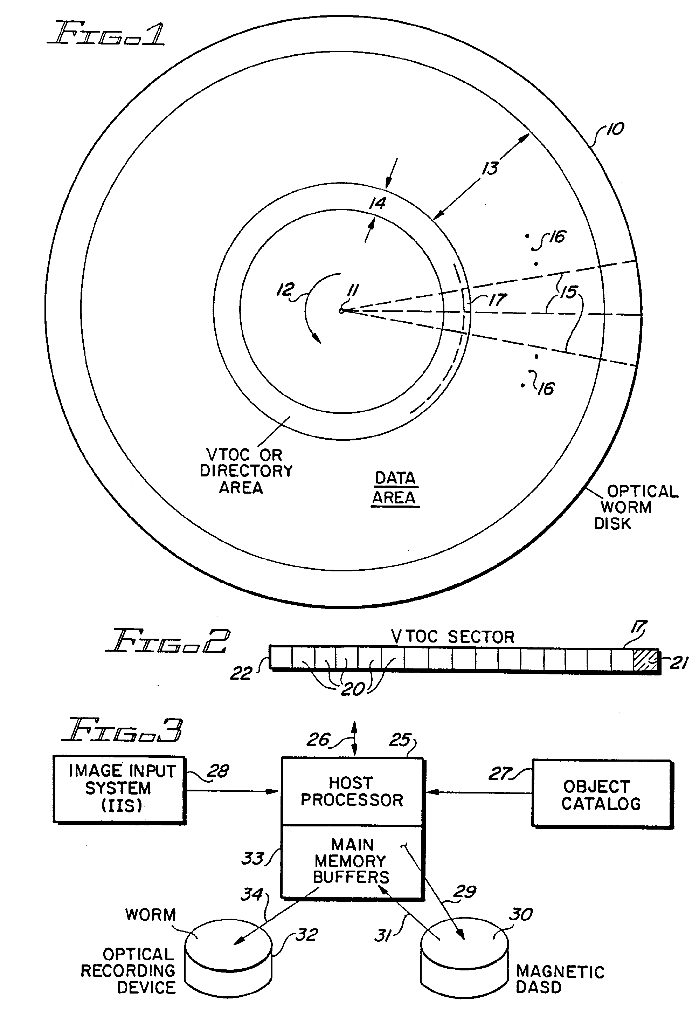

Fig. 1 is a diagram of an optical disk of the write-once, read-many type with which the present invention is advantageously practiced.

Fig. 2 is a simplified diagram of one addressable sector of the Fig. 1-illustrated disk used for storing a given number of VTOC entries.

Fig. 3 is a simplified block diagram of an information handling system in which the present invention may be advantageously practiced.

Fig. 4 conceptually illustrates buffer elements used in connection with a preferred embodiment of the present invention.

Fig. 5 is a simplified overall flowchart showing a set of automatic machine operations for implementing the present invention.

Fig. 6 is a second simplified flowchart of automatic machine operations for practicing the present invention in its preferred mode of operations.

Fig. 7 diagrammatically illustrates chaining buffered objects to-be-stored in the Fig. 1-illustrated optical disk.

Referring now more particularly to the drawings in which like numerals and figures denote like features and structural elements in the various diagrams. Write-once, read-many (WORM) optical record disk or medium 10 is of the ablative recording type. Disk 10 when supported in an optical recorder-player (not shown) is rotated about axis 11 of the disk in the direction of arrow 12. A first radial portion 13 is logically reserved for receiving and recording data objects, preferably of the image data type. Radial portion 14 is logically reserved for recording a volume table of contents (VTOC) which, in a preferred form, is a simple directory structure. Embossed or otherwise permanently inserted into the recording surface of disk 10 are a plurality of radially-extending lines 15 which denote the circumferential boundaries of addressable recording sectors, blocks or areas of disk 10. Each of the lines 15, which are equally angularly spaced apart, may include a recorded radial address of the immediately-following sector (track address), as well as the circumferential or angular position of the following sector, i.e., sector number. Ellipses 16 indicate that angularly, equally-spaced sector lines 15 are disposed entirely around the disk 10 in the areas 13 and 14. A usual radial index mark may be provided, as is well known. Data objects are recorded in area 13, along the various concentric tracks of sectors or in a single spiral track of sectors disposed in such area using allocation techniques which are well known. In a similar manner, the addressable sectors within directory area 14 receive and store VTOC entries which identify and locate the data stored on disk 10. It is desired to maximise the number of VTOC entries in each of the addressable sectors in area 14, such as in addressable sector 17, which is shown in Fig. 2. Within sector 17, a plurality of VTOC entries, one entry per data object recorded in radial area 13, are represented by boxes 20. Each entry is but a small portion of the total capacity of an addressable sector 17. Even with a given number of VTOC entries 20 recorded in a single sector 17, a padding area 21 not containing any data may be required. In an early constructed embodiment of the invention, padding area 21 was eliminated. A sector header 22 and twelve VTOC entries filled a sector 17 having a 1024-byte capacity. Each header 22 included a block or sector identification and the number of VTOC entries (from 1 to 12) in the sector. Each VTOC entry consumed 80 bytes for identifying the name of the stored data object, its length, the sector of disk 10, which is the lowest sector number storing the data object (where its recording begins), the number of blocks (sectors) occupied by the data object, and date and time of recording. Other control information may also be included, as may be desired.

It is always desired to eliminate or reduce the padding area 21 of the VTOC area. For example, if three VTOC entries 20 were recorded in a single VTOC sector, then the padding area would comprise a major portion of the sector thereby wasting space within directory area 14 of disk 10. For space conservation or usage, consider recording data objects, each consisting of 4K (4096) data bytes and one VTOC entry recorded in one VTOC sector. Each data object then actually requires 5K (5120) bytes of disk 10 storage capacity. The sole VTOC entry is 20% of the total disk space used. If 12 VTOC entries are recorded in a single addressable VTOC sector, such as sector 17, the VTOC overhead of the disk 10 storage space for VTOC entries is reduced from 20% to about 2%. When data objects have a size of 100K bytes, the disk 10 space required for a single VTOC entry per VTOC sector is reduced from 20% for the 4K byte data objects to 1% of space utilisation for each stored 100K byte data object. When storing 12 VTOC entries per directory sector 17 for the 100K byte data objects, the VTOC entry overhead is reduced to less than 0.1% of storage space required for each 100K byte data object.

The data transfer rate for optical disks is often substantially less than the data transfer rates for magnetic DASD. Accordingly, in an information handling system, magnetic DASD are considered as fast access devices while optical disk recorders are regarded as slow access recorders. For purposes of simplifying control, the directory area 14 is a separate radial portion on the disk 10 from the data recording portion. Each access to the directory portion 14 requires a separate radial seek of the headarm (not shown) which introduces headarm delays and intervening latency delays of disk 10 rotation for access to addressed ones of the disk 10 sectors. In certain low performance optical recorders, recording a single data object and recording a single VTOC entry with average seek and disk rotation times of 125 milliseconds results in about one-half second for recording one data object and one VTOC entry. The actual writing time for a 4K object and a single VTOC entry is then about 16 milliseconds for the data and 504 milliseconds for the VTOC entry for a total of 520 milliseconds. Most of the time is required for writing the VTOC entry (headarm movement causes the extra access time) reducing the effective data rate to an unacceptable low rate. Grouping or batching twelve objects for allowing twelve VTOC entries to be recorded in an addressable directory sector 17 results in recording 48K bytes of data in 192 milliseconds plus 520 milliseconds for recording all twelve of the VTOC entries. The total elapsed time is then 696 milliseconds for the twelve objects. This change results in a lower percentage of the total time for recording to record the control information in VTOC entries while increasing the effective data rate for recording data objects. The effective data rate increases further when the number of data objects chained together is increased in each access to disk 10. Accordingly, grouping data objects as an integer multiple number of VTOC entries storable in a directory sector not only conserves record media 10 storage space but also enhances the performance of the information handling system in which disk 10 is employed.

Referring now more particularly to Fig. 3, host processor 25 of the information handling system is assigned to process the image data objects to be stored on disk 10. Double-headed arrow 26 indicates that host processor 25 may be operatively connected to other host processors (not shown) or other information handling systems, as is known. An object catalogue 27 is employed in the information handling system in a usual manner. The catalogue 27, as usual, is stored on fast accessing magnetic DASD (not shown). Catalogue 27, a system wide directory of data objects, provides access to data objects recorded or otherwise being manipulated in the Fig. 3 information handling system. Catalogue 27 includes identifications, status and locations of all the data objects. It also indicates when a plurality of copies of a data object are stored in various locations in the system.

Image data objects to be recorded are received from image input system IIS 28 which are supplied to host processor 25 for processing. IIS 28 may include a document sensor or reader (not shown) for converting document recorded data into electronic image data objects, as is known. The image data objects supplied to host processor 25 are stored, as indicated by arrow 29, onto fast access magnetic DASD 30. DASD 30 may be shared among a plurality of host processors (not shown) for manipulating the received image data objects. While host processor 25 is processing data objects, it keeps track of the accumulated image data objects and their associated control information in its own internal control structures. Additionally, host processor 25 periodically updates catalogue 27 for indicating to all host processors and users of the information handling systems, the image data objects stored in magnetic DASD 30. DASD 30 stores the received data objects at least until host processor 25 schedules the DASD-stored data objects for recording onto the optical write-once, read-many (WORM) disk 10. DASD 30 may retain a copy of the data objects after disk 10 receives and stores its copy of the data objects.

Host processor 25 prepares a list of the DASD 30 stored data objects to be copied (indicated by arrows 31 and 34) from DASD 30 to optical recording device 32. While building chains of data objects to be stored on disk 10, host processor 25 stages DASD 30 stored data objects into the chains being built in its main memory data buffers 33. When host processor 25 determines that an integral number of data objects, having a total data byte capacity of a given range, are being stored in data buffers 33, then host processor 25 activates the optical WORM recording device 32, which contains a record disk 10, for receiving the chained data objects and their associated control (VTOC) information. This action is indicated by arrow 34 extending from data buffers 33 to device 32. In a constructed embodiment, device 32 consists of a random-access optical disk library (not shown) mechanism having a plurality of recording devices. The library portion has an open-sided storage wall storing a plurality of disks 10, one disk in each storage cell of the wall. A transfer device moves the disks between the cells and the recording devices all under host processor 25 control. Such media library operations are well known.

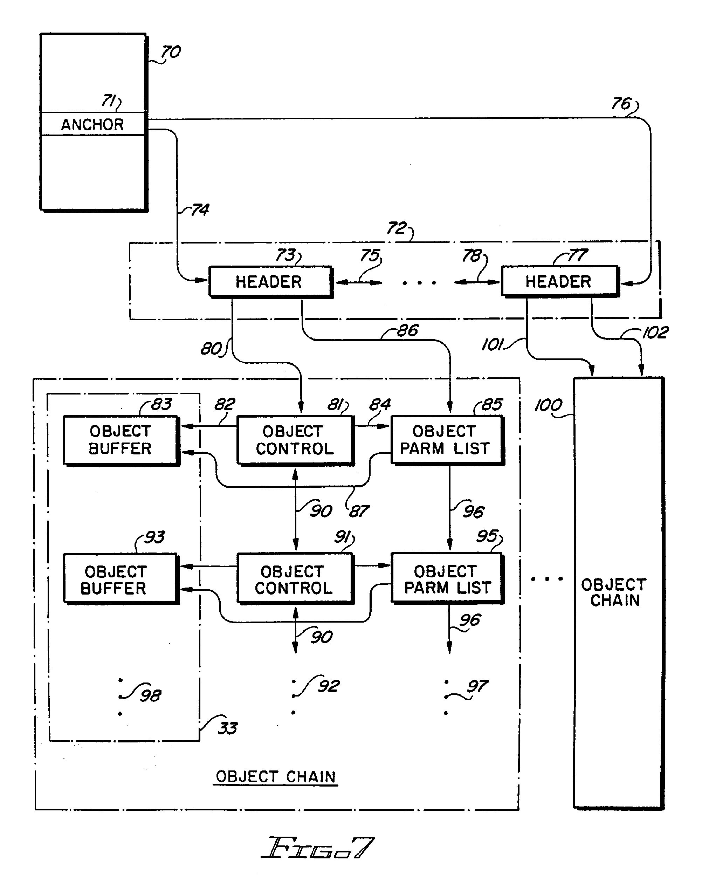

Referring now to Fig. 4, the conceptual image data buffer structure in buffers 33 (in host processor main storage) is illustrated. The various image data objects are stored in data buffer portions 35 while the control information is stored in VTOC buffer portions 36. The number of data objects and their respective sizes (if different) are stored in suitable counters 37. Data structures for such buffering and counting are shown in Fig. 7. Figure 4 illustrates three groups of data buffers, three groups of VTOC buffers and three groups of entry counters 35-37. Each of the three groups store different types of image data objects; that is, the image data processing is effectively interleaved or multitasked in the information handling system. One type of image data objects can be bank checks, a second can be letters and memos, a third can be contracts, etc. All three types could be intermingled on disk 10 or recorded on separate disks. The rest of the discussion is directed toward but one of the three types of image data objects. It will be assumed that each image data object has a variable number of bytes of data with each data object representing a single document, such as a negotiable instrument, timecard, or the like. The VTOC buffer 36 has a plurality of entries, each entry being represented by the unnumbered rectangular boxes within the VTOC buffer. The format of the information stored in the VTOC buffer may be different from that stored on disk 10. Conversion of formats is in accordance with normal formatting procedures. Counter 37 counts the number of data objects stored in data buffer 35.

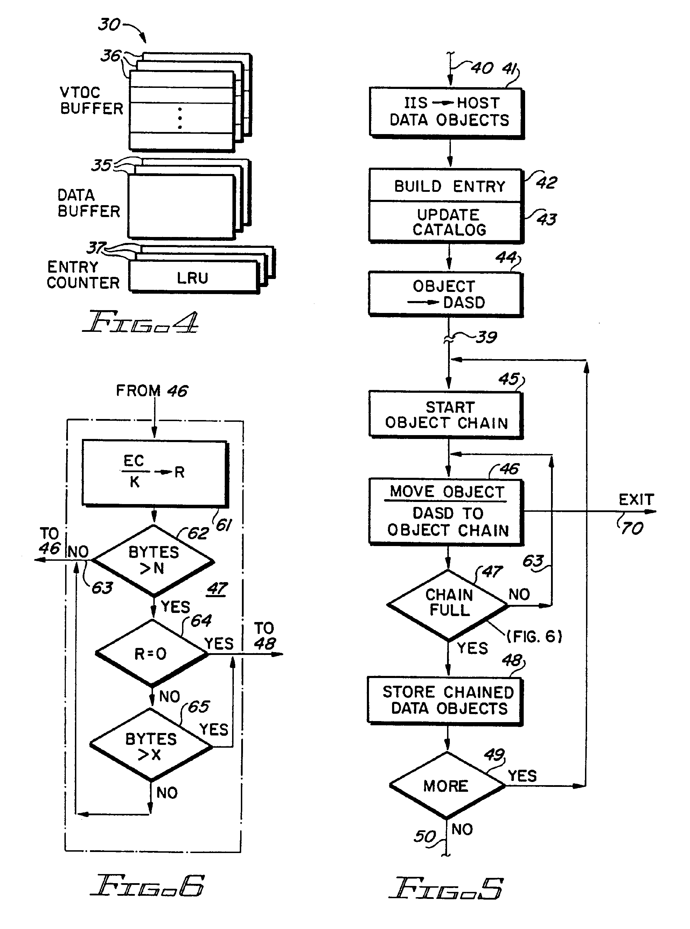

If all data objects have the same size, counter 37 only counts the number of objects, the total bytes being easily determined from the object count. It is the usual situation to encounter variably-sized data objects. When such variable-sized objects are being stored in a data buffer 35, then counter 37 not only includes the object count but the byte count for each data object and the cumulative total of byte counts for all of the objects. Since host processor 25 may perform information handling operations on the data objects, a least-recently used (LRU) data castout or destaging system may be employed within counter 37. Further, an age floor may be required before any data object is transferred to the optical disk 10. That is, DASD 30 must have stored a given object for so many minutes, hours or days before it is eligible for storage on an optical disk 10. Additionally, the well-known, least-recently used (LRU) criteria may be employed for establishing when the data is to be recorded on the optical disk. In the preferred illustrative embodiment, the transfer of objects from magnetic DASD 30 to optical disk 10 is in accordance with the Fig. 6-illustrated automatic machine operations.

Figs. 5 and 6 are simplified machine operation charts which show the sequence of machine operations for storing the image data objects onto disk 10 received from IIS 28. The machine operations are preferably effected through program means constructed as indicated by the machine operation charts. It is to be appreciated that host processor 25 interleaves the described machine operations with other operations beyond the scope of the present description. In any event, at line 40, the machine operations of host processor 25 begin. At step 41, image data objects are received by host processor 25 from IIS 28. Such transfers may be controlled by external interrupt supplied by IIS 28 to host processor 25. At step 42, host processor 25 builds a catalogue 27 entry for each received data object, which includes the name of the data object (which may be a sequence number of scanning of the documents being processed in IIS 28). At this time, host processor 25 in step 43 updates catalogue 27 using known techniques. Following catalogue 27 updating, various other data processing operations (not shown) may be performed.

At this time, the received data object may reside only in host processor 25. At step 44, host processor 25 records the data object received from IIS 28 on DASD 30. Following storing the image data object and any associated control information in DASD 30, additional data processing or information handling operations 39 occur. Such data processing operations include receiving additional image data objects, fetching data objects stored in one or more disks 10, etc. Host processor 25 starts an object chain in buffers 33 at step 45. If a chain header already exists, a partially completed chain also exists, as will become apparent. In this latter instance, the existing partially-completed chain is completed before a second chain is started. Such chaining structure is shown in Fig. 7 and is later described. At step 46, one data object is copied from DASD 30 to the chain being constructed. Included in this machine operation step is updating the data object count and totalling the number of bytes in the chain so far. Fig. 7 shows the data structure used for such counting. Then host processor 25 at step 47 determines the number of data objects currently in the chain being built and whether or not the number of data objects in the chain is an integral multiple of the number of VTOC entries storable in a single addressable sector of disk 10. If the criteria for transferring the data objects from DASD 30 to disk 10 are not met, then host processor 25 transfers another data object from DASD 30 to the chain being built. If all data objects have been copied from DASD 30, host processor 25 then stops building the chain as indicated by exit arrow 70 to perform other machine operations including receiving more data objects, etc. Whenever criteria are met for transferring the chain of data objects to disk 10, then host processor 25 at step 48 stores the chained data objects on disk 10. This recording operation preferably proceeds independently of building chains of data objects; the known recording operation by a usual recording program is initiated from the illustrated sequence of machine operations. The parameters for recording chained data objects on disk 10 in device 32 are set up using known device selection methods. As a part of the disk 10 recording operations, the VTOC entries for the respective chained data objects are created in a known manner and recorded into a next VTOC sector of disk 10. At step 49, host processor 25 ascertains if additional data objects stored in DASD 30 are to be copied to disk 10. If there are more data objects to be copied, machine steps 45-48 are repeated, otherwise host processor 25 proceeds to other operations (exit) at line 50. Upon completion of the data recording of each chain, the catalogue 27 is updated to reflect the data transfers and recording. The recorded chain of data objects is erased from buffers 33.

Fig. 6 shows a preferred simplified set of machine operations for actually performing the criteria determination of step 47 for the chained data objects to be copied to disk 10. Entry into the Fig. 6-illustrated automatic machine operations is from step 46 of Fig. 5. In step 61, host processor 25 divides the data object count EC of the number of data objects currently in the chain being built of its copy of the counter 37 by K, where K is the number of VTOC entries storable in a single disk 10 sector. Host processor 25 then determines the remainder R of that division step and stores it in a work area (not shown). At step 62, host processor 25 compares the number of bytes currently stored in data buffer 35 which are in the chain with a number N. The number N is a minimum threshold of data bytes in the chained objects to be transferred to disk 10 during a single disk 10 access. If the minimum threshold for data recording on disk 10 is not met, then host processor 25 returns to step 46 via path 63 to copy another data object to the chain. On the other hand, if the minimum data transfer byte count is exceeded, then at step 64, host processor 25 determines whether the remainder R from the division of step 61 is equal to zero. If R equals zero, then a data recording operation on disk 10 is initiated at step 48 (Fig. 5). On the other hand, if the remainder is non-zero at step 64, host processor 25 at step 65 determines whether or not the number of bytes currently in the chain being built is greater than an upper threshold X. Upper threshold X may be an order of magnitude greater than the minimum threshold N. If the number of data bytes in the chained objects is greater than X, then a recording operation on disk 10 is initiated at step 48 even though one of the VTOC sectors will not be completely filled with VTOC entries. On the other hand, whenever the number of data bytes accumulated in the chain being built is not greater than X, then the host processor 25 returns to step 46 for copying another data object from DASD 30 to the chain being built. In each recording operation for disk 10, the number of chained objects is usually an integral multiple of the value K. A requirement to record large-byte count data objects requires the upper threshold to ensure the capacity of buffers 33 is not exceeded.

Referring now more particularly to Fig. 7, the setup and control object for data buffers 33 within a main memory of host processor 25 is described. All programming employs control blocks of all types to manage the program execution sequences. Such approach to program management is well known. Only those control structures of host processor 25 that directly relate to and control the transfer of information within buffers 33 for the purpose of batching data objects being stored onto optical device 32 are described. A control task control block 70 controls the writing of information, such as data objects, to optical device 32. Anchor entry 71 anchors the write request (one chain of data objects) into control block 70. The write requests or series of chains constitute a doubly-linked list of write request headers. Header 73 is the first header of a doubly-linked list and is pointed to by a headlist pointer (not shown) of anchor 71, as indicated by arrow 74. Header 73 is the first header built by host processor 25 at step 45.

Double-headed arrows 75 and 78 with the intervening ellipses represent the middle write request headers of doubly-linked list 72. The trailing or last write request header 77 is pointed to by the trailing pointer (not shown) of entry 71, which points to the location in main memory of the trailing header as indicated by arrow 76. The headers within doubly-linked list 72 include pointers to later-described, linked-control lists used in connection with controlling the data object buffers within buffer 33, destination address of device 32, identification of a task of host processor 25, serial number of the write request of a task or other control information as usually found in write requests in data processing environments. Each of the headers of doubly-linked list 72 includes two pointers. The control structure headed by header 73 is described in detail, it being understood that the other control structures can be identical. Arrow 80 extending from header 73 represents a first address pointer of header 73 pointing to a doubly-linked list of object control blocks 81, 91, and 92. Double-headed arrows 90 represent the double linking of this linked list. Each of the data object control blocks are best described as a process control block which identifies the location of the object buffers 83, 93, 98, and the name of the contained data object(s), the size of the buffer (data links) and other information usually associated with managing buffers within a host processor main memory.

A second pointer of each of the headers in list 72, such as the second pointer of header 73 represented by arrow 86, points to a set of singly-linked data object parameters (PARM) lists 85, 95... (PARM) list. The first object parameter list 85 is also pointed to by an address field within object control block 81 as indicated by arrow 84. Object parameter list 85 also includes a pointer which points to the data buffer 83 as indicated by arrow 87. List 85 also includes a pointer as indicated by arrow 96 pointing to the next item on the singly-linked list such as OPL (object parameter list) 95. In the same manner, OPL 95 includes a pointer, as also indicated by an arrow 96, pointing to other OPL as indicated by ellipses 97. The doubly-linked list of object control blocks and a singly- linked list of object parameter lists comprise a single write request or chain to write data objects stored within buffers 33 to a disk 10. In a similar manner, header 77 has a pair of pointers respectively represented by arrows 101 and 102 pointing to the linked control list and in turn to the object buffers of object chain 100. Each of the headers within doubly-linked list 72 can correspond to one of a plurality of optical recording devices collectively represented by device 32. For example, in a media library environment, four optical recording devices could be employed. In that case, four headers could comprise doubly- linked list 72, each header comprising a single write request for a plurality of data objects which are an integral multiple of the VTOC entry storing capacity of a VTOC sector on a respective disk 10. A practical embodiment will usually include a plurality of control task control blocks 70 each with similarly anchored linked list of chain headers 72 and with attached object chains, as shown.

The host processor writes to disk 10 the information contained in the linked list associated with the object buffers sequence the transfer of data from the buffers into device 32, as is practiced with similar control blocks in day-to-day data processing operations that are well known. Upon completion of the recording operation, the location on disk 10 of the recorded data objects is known. At that time, the VTOC entry is generated by the recording program activated at step 48 using known techniques and recorded in portion 14 of disk 10. Upon completion of recording a data object on disk 10, its recorded location (disk name, sector numbers, etc.) on disk is inserted by the recording program into the OPL 85, 95...for the data object. Host processor 25 accesses the OPL's 85, 95...for updating catalogue 27. After all of these "housekeeping" machine operations occur, the recorded data object is erased from buffer 33, then the chain structure is removed after all of the "housekeeping" for the chain is completed.

## Claims

1. A method of operating an information handling system which includes a host processor (25), a relatively rapid access data buffer element means (30, 33) and a large capacity slower access record medium (32), in which a plurality of data objects to be stored on said record medium means are automatically accumulated in said buffer element means;
characterised by the steps of:
(a) for each of said accumulated objects, building a VTOC directory entry (81) and storing the entry in said buffer element means;
(b) determining the number of said VTOC directory entries storable in a single one of the addressable storage areas of said record medium means;
(c) dividing (61) the number of accumulated data objects by said determined number and when the number of accumulated data objects is equal to or is an integral multiple of said determined number, selecting that number of accumulated data objects and associated VTOC directory entries from said buffer element and transferring same (48) to said record medium during a single access to said record medium means.

2. A method as claimed in claim 1, further including the steps of:
(e) establishing a lower threshold of a minimum number of data bytes to be transferred during said single access; and
(f) accumulating said data objects in said buffer element means until said lower threshold is exceeded and the number of accumulated data objects is an integral multiple of said determined number, then performing said single access.

3. A method as claimed in claims 1 or 2, further including steps of:
(g) establishing an upper threshold of a maximum number of data bytes of said accumulated data objects to be stored in said buffer element means; and
(h) whenever the total number of bytes in the accumulated data objects exceeds said upper threshold, activating said single access irrespective of whether or not the division of the number of data objects is an integral multiple of said determined number.

4. A method as claimed in claims 1, 2 or 3, further including step of:
(i) selecting said record medium means to include a write-once read-many record medium for receiving and storing said data objects and VTOC directory entries.

5. An information handling system, comprising:
a host processor (25) having a main memory (33) and program indicia which are sensible by said host processor and to which the host processor responds to automatically perform machine operations indicated by said program indicia;
data object input means (28) operatively coupled to said host processor for supplying data objects to said host processor;
a fast access buffer (30,33) operatively coupled to said host processor for receiving data to be stored in the buffer and to supply such stored data to the host processor;
a slow response recorder operatively coupled to the host processor and having a slow access record medium (32) which is capable of storing large amounts of data;
and characterised by
said program indicia including entry indicia for enabling the host processor to respond to received data objects and for building a VTOC directory entry (81) for each of said received data objects;
said information handling system further comprising:
buffer indicia for enabling said host processor to store said received data objects and their associated built VTOC directory entries into said fast access buffer;
counter indicia for enabling the host processor to count the number of data objects stored in said fast access buffer and including indications of the total number of data bytes stored in the buffer;
sector indicia means indicating a predetermined number of said built VTOC directory entries storable in a given addressable storage area of the record medium in said slow response recorder;
divide indicia means for enabling said host processor to access said indicating indicia means and said count indicia means for dividing the count of said data objects stored in the buffer by said predetermined number, then for indicating the value of a remainder;
transfer initiation indicia means for enabling the host processor to compare the value of the remainder for determining its zero value; and
single access data transfer indicia for enabling said host processor to respond to the remainder being zero to transfer an integral multiple of said predetermined number of data objects from said buffer to said slow response recorder in a single access set of data transfer operations.

6. A system as claimed in claim 5, further including further program indicia of:
lower threshold indicia for enabling said host processor to delay said single access means responding to said remainder equals zero until a total number of bytes of said accumulated data objects are stored in said buffer.

7. A system as claimed in claims 5 or 6, further including:
upper threshold program indicia in said host processor for enabling the host processor to transfer said accumulated data objects from said buffer to said slow response recorder irrespective of the remainder value such that all VTOC entry receiving sectors but one have said predetermined number of VTOC entries stored therein.

8. An information handling system as claimed in claims 5, 6 or 7, further including:
write-once, read-many record media in said slow response recorder and said media being in a disk form with said accumulated data objects being storable in a first radial portion of the disk record medium and said VTOC directory entries being storable in a second radial portion of said record medium.

9. An information handling system as claimed in claims 5, 6, 7 or 8, wherein said fast access buffer includes a fast access magnetic DASD and a portion of said main memory; and
said buffer indicia for enabling said host processor to first store the received data objects into said DASD and later accumulate chains of copies of said stored data objects in said main memory and said single access data transfer indicia recording a chain of said data objects stored in said main memory during said single access.

## Patentansprüche

1. Ein Verfahren zum Betreiben eines Informationsverarbeitungssystems, das einen Host-Prozessor (25), eine Datenpufferelement-Einrichtung mit relativ schnellem Zugriff (30, 33) und ein Aufzeichnungsmedium großer Kapazität mit langsamerem Zugriff (32) umfaßt, und in dem eine Vielzahl von Datenobjekten, die auf der Aufzeichnungsmedium-Einrichtung gespeichert werden sollen, automatisch in der Pufferelement-Einrichtung akkumuliert werden; gekennzeichnet durch die Schritte zum:
(a) Erstellen eines VTOC-Verzeichniseintrags (81) für jedes der akkumulierten Objekte und Speichern des Eintrags in der Pufferelement-Einrichtung;
(b) Ermitteln der Anzahl der VTOC-Verzeichniseinträge, die in einem einzelnen der adressierbaren Speicherbereiche der Aufzeichnungsmedium-Einrichtung gespeichert werden können;
(c) Dividieren (61) der Anzahl der akkumulierten Datenobjekte durch die ermittelte Anzahl, und wenn die Anzahl der akkumulierten Datenobjekte gleich der ermittelten Anzahl oder gleich einem ganzzahligen Vielfachen der ermittelten Anzahl ist, Auswählen dieser Anzahl von akkumulierten Datenobjekten und zugehörigen VTOC-Verzeichniseinträgen aus dem Pufferelement und Übertragen derselben (48) an das Aufzeichnungsmedium während eines einzelnen Zugriffs auf die Aufzeichnungsmedium-Einrichtung.

2. Ein Verfahren nach Anspruch 1, das desweiteren die Schritte umfaßt zum:
(e) Festlegen eines unteren Grenzwertes einer Mindestanzahl von Datenbyte, die während des einzelnen Zugriffs übertragen werden sollen; und
(f) Akkumulieren der Datenobjekte in der Pufferelement-Einrichtung, bis der untere Grenzwert überschritten wird und die Anzahl der akkumulierten Datenobjekte ein ganzzahliges Vielfaches der ermittelten Anzahl ist, und anschließendem Ausführen des einzelnen Zugriffs.

3. Ein Verfahren nach einem der Ansprüche 1 oder 2, das desweiteren Schritte umfaßt zum:
(g) Festlegen eines oberen Grenzwertes einer maximalen Anzahl von Datenbyte der akkumulierten Datenobjekte, die in der Pufferelement-Einrichtung gespeichert werden sollen; und
(h) sobald die Gesamtzahl der Byte in den akkumulierten Datenobjekten den oberen Grenzwert übersteigt, Aktivieren des einzelnen Zugriffs, unabhängig davon, ob die Division der Anzahl von Datenobjekten ein ganzzahliges Vielfaches der ermittelten Anzahl ergibt oder nicht.

4. Ein Verfahren nach einem der Ansprüche 1, 2 oder 3, das desweiteren Schritte umfaßt zum:
(i) Auswählen der Aufzeichnungsmedium-Einrichtung, so daß sie ein write-once, read-many-Aufzeichnungsmedium für das Empfangen und Speichern der Datenobjekte und der VTOC-Verzeichniseinträge umfaßt.

5. Ein Informationsverarbeitungssystem, das:
einen Host-Prozessor (25), der einen Hauptspeicher (33) und Programmarkierungen umfaßt, die von diesem Host-Prozessor erfaßt werden können und auf die der Host-Prozessor reagiert, um automatisch Maschinenoperationen auszuführen, die durch diese Programmarkierungen angezeigt werden;
Datenobjekt-Eingabeeinrichtungen (28), die operativ mit dem Host-Prozessor gekoppelt sind, um Datenobjekte an den Host-Prozessor zu liefern;
einen Puffer mit schnellem Zugriff (30, 33), der operativ mit dem Host-Prozessor gekoppelt ist, um im Puffer zu speichernde Daten zu empfangen und derartige gespeicherte Daten an den Host-Prozessor zu liefern;
ein langsam antwortendes Aufzeichnungsgerät, das operativ mit dem Host-Prozessor gekoppelt ist und das ein Aufzeichnungsmedium (32) mit langsamen Zugriff aufweist, das in der Lage ist, große Mengen von Daten zu speichern;
umfaßt und das dadurch gekennzeichnet ist,
daß die Programmarkierungen Eingabemarkierungen umfassen, um den Host-Prozessor zu aktivieren, damit dieser auf empfangene Datenobjekte reagiert, und um einen VTOC-Verzeichniseintrag (81) für jedes der empfangenen Datenobjekte zu erstellen,
wobei das Informationsverarbeitungssystems desweiteren:
Puffermarkierungen für das Aktivieren des Host-Prozessors zum Speichern der empfangenen Datenobjekte und ihrer zugehörigen erstellten VTOC-Verzeichniseinträge im Puffer mit schnellem Zugriff;
Zählermarkierungen für das Aktivieren des Host-Prozessors zum Zählen der Anzahl der Datenobjekte, die in dem Puffer mit schnellem Zugriff gespeichert sind, und zum Einfügen von Anzeigen der Gesamtzahl der im Puffer gespeicherten Datenbyte;
Sektormarkierungseinrichtungen zum Anzeigen einer zuvor festgelegten Anzahl der erstellten VTOC-Verzeichniseinträge, die in einem bestimmten adressierbaren Speicherbereich des Aufzeichnungsmediums im langsam antwortenden Aufzeichnungsgerät gespeichert werden können;
Divisionsmarkierungseinrichtungen zum Aktivieren des Host-Prozessors für das Zugreifen auf die Anzeigemarkierungseinrichtungen und die Zählermarkierungseinrichtungen zum Dividieren des Zählers der im Puffer gespeicherten Datenobjekte durch die zuvor festgelegte Zahl, und zum anschließenden Anzeigen des Wertes eines Restes;
Übertragungsaktivierungs-Markierungseinrichtungen zum Aktivieren des Host-Prozessors, damit dieser den Restwert vergleicht, um dessen Wert Null zu bestimmen; und
Datenübertragungsmarkierungen für den einzelnen Zugriff, um den Host-Prozessors zu aktivieren, damit dieser auf den Rest, der Null ist, reagiert, um ein ganzzahliges Vielfaches der zuvor festgelegten Anzahl von Datenobjekten in einem einzelnen Zugriffssatz von Datenübertragungsoperationen von dem Puffer an das langsam antwortende Aufzeichnungsgerät zu übertragen;
umfaßt.

6. Ein System nach Anspruch 5, das darüber hinaus weitere Programmarkierungen umfaßt in Form von:
unteren Grenzwertmarkierungen, mit denen der Host-Prozessor aktiviert wird, um die einzelnen Zugriffseinrichtungen zu verzögern, die darauf reagieren, daß der Rest gleich Null ist, bis eine Gesamtzahl von Byte der akkumulierten Datenobjekte in dem Puffer gespeichert ist.

7. Ein System nach einem der Ansprüche 5 oder 6, das desweiteren
obere Grenzwert-Programmarkierungen in dem Host-Prozessor umfaßt, um den Host-Prozessor zu aktivieren, damit dieser unabhängig vom Restwert die akkumulierten Datenobjekte von dem Puffer an das langsam antwortende Aufzeichnungsgerät überträgt, damit in allen Empfangssektoren für VTOC-Einträge, mit Ausnahme eines einzigen Empfangssektors, die zuvor festgelegte Anzahl von VTOC-Einträgen gespeichert wird.

8. Ein Informationsverarbeitungssystem nach einem der Ansprüche 5, 6 oder 7, das desweiteren:
ein write-once, read-many-Aufzeichnungsmedium in dem langsam antwortenden Aufzeichnungsgerät umfaßt, wobei dieses Medium Plattenform aufweist und wobei die akkumulierten Datenobjekte in einem ersten radialen Bereich des Plattenaufzeichnungsmediums und die VTOC-Verzeichniseinträge in einem zweiten radialen Bereich des Aufzeichnungsmediums gespeichert werden können.

9. Ein Informationsverarbeitungssystem nach einem der Ansprüche 5, 6, 7 oder 8, bei dem der Puffer mit schnellem Zugriff ein magnetisches DASD mit schnellem Zugriff und einen Bereich des Hauptspeichers umfaßt; und
wobei die Puffermarkierungen den Host-Prozessor aktivieren, damit dieser zunächst die empfangenen Datenobjekte auf dem DASD speichert und danach Ketten von Kopien der gespeicherten Datenobjekte in dem Hauptspeicher akkumuliert, und wobei die Datenübertragungsmarkierungen für den einzelnen Zugriff eine Kette der Datenobjekte aufzeichnen, die während des einzelnen Zugriffs im Hauptspeicher gespeichert sind.

## Revendications

1. Méthode de commande d'un système de traitement d'informations qui comprend un processeur hôte (25), un moyen d'élément tampon de données à accès relativement rapide (30, 33) et un moyen support d'enregistrement à accès plus lent de grande capacité (32), dans laquelle une pluralité d'objets de données à emmagasiner sur ledit moyen support d'enregistrement sont automatiquement accumulés dans ledit moyen d'élément tampon;
caractérisée par les étapes de:
(a) pour chacun desdits objets accumulés, construire une entrée de répertoire VTOC (81) et emmagasiner l'entrée dans ledit moyen d'élément tampon;
(b) déterminer le nombre desdites entrées de répertoire VTOC pouvant être emmagasinées dans une seule des zones d'emmagasinage adressables dudit moyen support d'enregistrement;
(c) diviser (61) le nombre d'objets de données par ledit nombre déterminé et, lorsque le nombre des objets de données accumulés est égal audit nombre déterminé ou est un multiple entier de celui-ci, sélectionner ce nombre d'objets de données accumulés et d'entrées de répertoire VTOC associées dans ledit élément tampon et les transférer (48) sur ledit support d'enregistrement durant un accès unique audit moyen support d'enregistrement.

2. Méthode selon la revendication 1, comprenant en outre les étapes de:
(e) établir un seuil inférieur d'un nombre minimal de multiplets de données à transférer durant un accès unique; et
(f) accumuler lesdits objets de données dans ledit moyen d'élément tampon jusqu'à ce que soit dépassé ledit seuil inférieur et que le nombre d'objets de données accumulés soit un multiple entier dudit nombre déterminé, puis accomplir ledit accès unique.

3. Méthode selon les revendications 1 ou 2, comprenant en outre les étapes de:
(g) établir un seuil supérieur d'un nombre maximal de multiplets de données desdits objets de données accumulés à emmagasiner dans ledit moyen d'élément tampon; et
(h) chaque fois que le nombre total de multiplets dans les objets de données accumulés dépasse ledit seuil supérieur, activer ledit accès unique indépendamment de si la division du nombre d'objets de données est, ou non, un multiple entier dudit nombre déterminé.

4. Méthode selon les revendications 1, 2 ou 3, comprenant en outre l'étape de:
(i) sélectionner ledit moyen support d'enregistrement pour inclure un support d'enregistrement à écriture une fois-lecture de nombreuses fois pour recevoir et emmagasiner lesdits objets de données et entrées de répertoire VTOC.

5. Système de traitement d'informations comprenant:
un processeur hôte (25) ayant une mémoire principale (33) et des indices de programme qui sont sensibles par ledit processeur hôte et auxquels le processeur hôte répond pour accomplir automatiquement des opérations machine indiquées par lesdits indices de programme;
un moyen d'entrée d'objets de données (28) couplé dans son fonctionnement audit processeur hôte pour fournir des objets de données audit processeur hôte;
un tampon à accès rapide (30, 33) couplé dans son fonctionnement audit processeur hôte pour recevoir des données à emmagasiner dans le tampon et pour fournir ces données emmagasinées au processeur hôte;
un enregistreur à réponse lente couplé dans son fonctionnement au processeur hôte et ayant un support d'enregistrement à accès lent (32) qui est capable d'emmagasiner de grandes quantités de données;
et caractérisé par
lesdits indices de programme comprenant des indices d'entrée pour permettre au processeur hôte de répondre aux objets de données reçus et pour construire une entrée de répertoire VTOC (81) pour chacun desdits objets de données reçus;
ledit système de traitement d'informations comprenant en outre:
des index de tampon pour permettre audit processeur hôte d'emmagasiner lesdits objets de données reçus et leurs entrées de répertoire VTOC construites associées, dans ledit tampon à accès rapide;
des index de compteur pour permettre au processeur hôte de compter le nombre d'objets de données emmagasinés dans ledit tampon à accès rapide et comprenant des indications du nombre total de multiplets de données emmagasinés dans le tampon;
un moyen d'index de secteur indiquant un nombre prédéterminé desdites entrées de répertoire VTOC construites pouvant être emmagasinées dans une zone d'emmagasinage adressable du support d'enregistrement dans ledit enregistreur à réponse lente;
un moyen d'index de division pour permettre audit processeur hôte d'avoir accès audit moyen d'index indicateur et audit moyen d'index de compte pour diviser ledit compte desdits objets de données emmagasinés dans le tampon par ledit nombre prédéterminé, puis pour indiquer la valeur d'un reste;
transférer un moyen d'index d'initiation pour permettre au processeur hôte de comparer la valeur du reste afin de déterminer sa valeur zéro; et
des index de transfert de données à accès unique pour permettre audit processeur hôte de répondre au reste alors zéro pour transférer un multiple entier dudit nombre prédéterminé d'objets de données depuis ledit tampon jusqu'audit enregistreur à réponse lente dans une opération de transfert d'ensemble de données à accès unique.

6. Système selon la revendication 5, comprenant d'autres indices de programmes:
d'index de seuil inférieur pour permettre audit processeur hôte de retarder ledit moyen à accès unique répondant audit reste égal à zéro jusqu'un ce qu'un nombre total de multiplets desdits objets de données accumulés soit emmagasiné dans ledit tampon.

7. Système selon les revendications 5 ou 6, comprenant en outre:
des indices de programme de seuil supérieur dans ledit processeur hôte pour permettre au processeur hôte de transférer lesdits objets de données accumulés depuis ledit tampon jusqu'audit enregistreur à réponse lente indépendamment de la valeur du reste si bien que tous les secteurs de réception d'entrée VTOC sauf un aient emmagasiné dedans ledit nombre prédéterminé d'entrées VTOC.

8. Système de traitement d'informations selon les revendications 5, 6 ou 7, comprenant en outre:
un support d'enregistrement à écriture une fois-lecture plusieurs fois dans ledit enregistreur à réponse lente et ledit support étant sous forme de disque où lesdits objets de données accumulés peuvent être emmagasinés dans une première portion radiale du support d'enregistrement sur disque et où les entrées de répertoire VTOC peuvent être emmagasinées dans une deuxième portion radiale dudit support d'enregistrement.

9. Système de traitement d'informations selon les revendications 5, 6, 7 ou 8, dans lequel ledit tampon à accès rapide comprend un dispositif DASD magnétique à accès rapide et une portion de ladite mémoire principale; et
lesdits index de tampon pour permettre audit processeur hôte d'enregistrer tout d'abord les objets de données reçus dans ledit dispositif DASD et ensuite d'accumuler des chaînes de copies desdits objets de données emmagasinés dans ladite mémoire principale, et lesdits index de transfert de données à accès unique enregistrant une chaîne desdits objets de données emmagasinés dans ladite mémoire principale durant ledit accès unique.
